# EUROPÄISCHE PATENTSCHRIFT

(11) **EP 2 681 038 B1**
(45) Veröffentlichungstag und Bekanntmachung des Hinweises auf die Patenterteilung: **15.04.2015**
(21) Anmeldenummer: 12705873.3
(22) Anmeldetag: 27.02.2012
(51) Int. Cl.: B29C 70/50, B29B 15/12, B29C 70/08, B29K 77/00

(54) **VERFAHREN ZUR HERSTELLUNG VON FASERVERSTÄRKTEN, FLACHEN HALBZEUGEN MIT POLYAMIDMATRIX**
METHOD FOR PRODUCING FIBER-REINFORCED, FLAT SEMI-FINISHED PRODUCTS CONTAINING A POLYAMIDE MATRIX
PROCEDE DE FABRICATION DE PRODUITS SEMI-FINIS PLATS RENFORCES PAR FIBRES SUR UNE MATRICE POLYAMIDE

(30) Priorität: 03.03.2011 EP 11156759
(43) Veröffentlichungstag der Anmeldung: 08.01.2014
(73) Patentinhaber: BASF SE, 67056 Ludwigshafen (DE); Volkswagen AG, 38440 Wolfsburg (DE)
(72) Erfinder: SCHERZER, Dietrich, 67433 Neustadt (DE); SCHAEFER, Stephan, 64347 Griesheim (DE); RADTKE, Andreas, 68161 Mannheim (DE); WOLLNY, Andreas, 67063 Ludwigshafen (DE); EHLEBEN, Max, 38126 Braunschweig (DE); TAEGER, Olaf, 38126 Braunschweig (DE); HAIN, Joerg, 38518 Gifhorn (DE); KRAMER, Manfred, 38518 Gifhorn (DE); HERMES, Christoph, 85080 Gaimersheim (DE)
(74) Vertreter: Rippel, Hans Christoph
(86) Internationale Anmeldenummer: PCT/EP2012/053246
(87) Internationale Veröffentlichungsnummer: WO 2012/116947

(56) Entgegenhaltungen:
- WO-A1-03/053661
- DE-A1- 19 510 237
- US-A1- 2009 081 448
- US-A1- 2010 075 144

## Beschreibung

Die Erfindung betrifft ein Verfahren zur Herstellung von faserverstärkten, flachen Halbzeugen mit Polyamidmatrix.

Die faserverstärkten, flachen Halbzeuge werden zur Herstellung von Bauteilen aus verstärkten thermoplastischen Polymeren, bevorzugt Polyamiden, eingesetzt und nach dem Aushärten auch als Organoblech oder thermoplastisches Prepreg bezeichnet. Die Formgebung erfolgt dabei durch Tiefzieh- oder alternative Pressverfahren.

Zur Herstellung von faserverstärkten Verbundwerkstoffen werden üblicherweise die Fasern in ein geeignetes Werkzeug eingelegt und anschließend mit dem geschmolzenen Polymeren umgossen. Alternativ ist es auch möglich, die Fasern mit einer Monomerlösung zu umgießen, die in der Form auspolymerisiert. Insbesondere bei dichten Faser-Packungen hat dies jedoch den Nachteil, dass aufgrund der hohen Viskosität der Polymerschmelzen die Fasern nicht vollständig benetzt werden, was zu einer Schwächung des Werkstoffes führt. Das Umgießen mit Monomeren wird üblicherweise bei duroplastischen Polymeren durchgeführt, hat jedoch den Nachteil, dass eine kontinuierliche Verarbeitung nicht möglich ist, da die aus dem faserverstärkten Verbundwerkstoff hergestellten Bauteile jeweils in der Form aushärten müssen. Nach dem Umgießen und Aushärten ist die Formgebung bereits erfolgt. Die Herstellung von weiterverarbeitbaren Halbzeugen ist auf diese Weise nur schwer möglich. Es sind Prepregs auf Basis von teilausgehärteten Epoxidharzen bekannt, diese müssen aber, um ein unerwünschtes Aushärten während der Lagerung zu vermeiden, gekühlt gelagert werden. Das Aushärten in der Form limitiert zudem den möglichen Durchsatz, was insbesondere zur Herstellung von Bauteilen in der Großserie nachteilig ist.

Die Benetzung der Fasern mit einem Monomeren für ein faserverstärktes thermoplastisches Polymer ist aus DE-A 196 02 638 bekannt. Hierbei wird ein Verstärkungsfaserngebilde, beispielsweise ein Gewebe oder einzelne Lagen aus Endlosfasern, mit einer Schmelze aus Lactam, das Aktivator, Katalysator und gegebenenfalls weitere Additive enthält, getränkt. Nach dem Tränken mit der Lactamschmelze erfolgt eine Erwärmung auf Reaktionstemperatur und das Lactam polymerisiert zu dem korrespondierenden Polyamid. Um zu vermeiden, dass geschmolzenes Lactam aus dem Verstärkungsfaserngebilde abtropft, ist es notwendig, unmittelbar an das Tränken den Polymerisierungsschritt anzuschließen. Dies hat den Nachteil, dass durch den Polymerisierungsschritt die Verarbeitungsgeschwindigkeit limitiert wird. Zur Herstellung einer größeren Anzahl an Teilen ist es notwendig jeweils Anlagen bereitzustellen, in denen zunächst die Verstärkungsfaserngebilde mit der Lactamschmelze getränkt werden und anschließend zu dem Formteil geformt werden. Aus der DE-A 196 02 638 ist weiterhin bekannt, zur Herstellung von Formteilen aus flachen, faserverstärkten Elementen zunächst die flachen, faserverstärkten Elemente durch Tränken von textilen Strukturen mit Lactam und anschließendes Auspolymerisieren zu erzeugen und anschließend die so hergestellten auspolymerisierten faserverstärkten Elemente in einem beheizten Werkzeug zum Formteil umzuformen.

Auch aus DE-A 10 2007 031 467 ist ein Verfahren bekannt, bei dem zur Verstärkung eingesetzte Fasern mit einer Schmelze aus Lactam getränkt werden und in einem sich unmittelbar daran anschließenden Schritt das Lactam zum Polyamid vollständig auspolymerisiert wird. Bei dem hier beschriebenen Verfahren wird ein Granulat, das nur mit kurzen Fasern verstärkt ist, hergestellt, das anschließend durch Spritzguss oder Extrusion verarbeitet werden kann. Die Herstellung von Organoblechen, die als Verstärkung Endlosfasern enthalten, ist damit nicht möglich.

Ein weiteres Verfahren zur Herstellung von faserverstärkten Verbundwerkstoffen aus Polyamid 6 und Copolyamiden aus Polyamid 6 und Polyamid 12 ist in WO-A 2011/003900 beschrieben. Auch hier erfolgt die Polymerisierung der eingesetzten Monomere unmittelbar nach dem Tränken der Fasern, so dass ein großserientauglicher Einsatz zur Herstellung von Bauteilen aus Organoblechen mit dem Verfahren nicht möglich ist.

Dokument WO 03/053661 offenbart ein Verfahren zu Herstellung von faserverstärkten, flachen Halbzeugen auf Polyamidmatrix, bei dem eine textile Struktur mit einer Mischung enthaltend geschmolzenes Lactam, Katalysator und gegebenenfalls Aktivator getränkt wird, bei einer Temperatur, bei der die Lactamschmelze noch nicht polymerisiert, in einem nächsten Schritt die getränkte Faserstruktur erhitzt und polymerisiert wird und abschließend das so entstandene polymerisierte faserverstärkte Bauteil abgekühlt und konfektioniert wird.

Aufgabe der vorliegenden Erfindung ist es ein Verfahren zur Herstellung von faserverstärkten, flachen Halbzeugen bereitzustellen, das sich kontinuierlich betreiben lässt und einen für die Großserienfertigung ausreichenden Durchsatz ermöglicht.

Gelöst wird die Aufgabe durch ein Verfahren zur Herstellung von faserverstärkten, flachen Halbzeugen, das folgende Schritte umfasst:
(a) Tränken von textilen Strukturen mit einer Mischung, enthaltend geschmolzenes Lactam, Katalysator und gegebenenfalls mindestens einen Aktivator,
(b) Träknen der getränkten textilen Strukturen durch Abkühlung,
(c) Konfektionieren der abgekühlten, getränkten textilen Strukturen zu einem flachen Halbzeug.

Durch das Tränken der textilen Strukturen und anschließende Abkühlen unter den Schmelzpunkt des Lactams ist es möglich, das Verfahren kontinuierlich zu betreiben. Zudem ist es nicht erforderlich, die so hergestellten, flachen Halbzeuge unmittelbar einer Polymerisation zuzuführen, so dass die Herstellung der Halbzeuge und die Fertigung der aus dem Halbzeug herzustellenden Bauteile unabhängig voneinander erfolgen können.

Das geschmolzene Lactam hat vorzugsweise eine Temperatur im Bereich von 70 bis 100°C. Wichtig ist, dass die Temperatur des geschmolzenen Lactams unterhalb der Starttemperatur gehalten wird, bei der das Lactam beginnt, zum Polyamid zu polymerisieren.

Als Lactam im Rahmen dieser Erfindung können Lauryllactam oder Caprolactam eingesetzt werden. Bevorzugtes Lactam ist Caprolactam, insbesondere ε-Caprolactam, das zu Polyamid 6 polymerisiert.

Bis zu 20 Gew.-%, bevorzugt 0 bis 17 Gew.-%, besonders bevorzugt 0 bis 15 Gew.-% des Caprolactams können durch Co-Monomere aus der Gruppe der Lactame mit mindestens 4 C-Atomen ersetzt werden. Besonders bevorzugt ist ω-Lauryllactam.

In einer bevorzugten Ausführungsform können Mischungen aus ε-Caprolactam und w-Lauryllactam eingesetzt werden. Das Mischungsverhältnis beträgt in der Regel 1000 : 1, bevorzugt 100 : 1, besonders bevorzugt 10 : 1, insbesondere 2 : 1.

Das geschmolzene Lactam kann Aktivatoren für Polyamid 6 enthalten. Geeignete Aktivatoren können zum Beispiel durch Umsetzung von Isocyanaten, beispielsweise Hexamethylendiisocyanat (HDI) mit Lactamen, beispielsweise ε-Caprolactam, hergestellt werden. Weiterhin eignen sich als Aktivatoren blockierte Isocyanate, Isophthaloylbiscaprolactam, Terephthaloylbiscaprolactam, Ester wie Dimethylphthalatpolyethylenglykol, Polyole oder Polydiene in Kombination mit Säurechloriden, Carbonylbiscaprolactam, Hexamethylendiisocyanat oder Acyllactamat, bevorzugt Isocyanate, Hexamethylendiisocyanat oder Acyllactamat, besonders bevorzugt Hexamethylendiisocyanat oder Acyllactamat.

Als Aktivatoren können alle Aktivatoren, die für die aktivierte anionische Polymerisation verwendet werden, eingesetzt werden, beispielsweise N-Acyllactame, wie N-Acetylcaprolactam, substituierte Triazine, Carbodiimide, Cyanamide, Mono- und Polyisocyanate und die entsprechenden maskierten Isocyanatverbindungen. Die Aktivatoren werden vorzugsweise in Konzentrationen von 0,1 bis 1 Mol-% bezogen auf die Lactammenge verwendet. Mit den eingesetzten Katalysatoren können Lactame mit mindestens 5 Ringgliedern, beispielsweise Caprolactam, Laurinlactam, Capryllactam, Önanthlactam, die entsprechenden C-substituierten Lactame oder Gemische der genannten Lactame polymerisiert werden.

Alternativ oder zusätzlich zur Beimischung des Aktivators zum Lactam ist es auch möglich, die Fasern der textilen Struktur zunächst mit dem Aktivator zu beschichten und anschließend die mit dem Aktivator beschichtete textile Struktur mit dem Lactam zu tränken. Dabei ist es zum Beispiel möglich, den Aktivator einer Schlichte zur Behandlung der Fasern beizumischen.

Geeignete alkalische Katalysatoren können durch Umsetzung eines Lactams oder eines Lactons mit der entsprechenden Alkali- beziehungsweise Erdalkaliverbindung, beispielsweise dem Alkoholat, Amid, Hydrid, Grignard-Verbindungen sowie den Alkalibeziehungsweise Erdalkalimetallen, hergestellt werden. Die Katalysatoren werden in der Regel in Mengen von 0,1 bis 40 Gew.-%, bevorzugt 0,2 bis 15 Gew.-%, bezogen auf die Lactamschmelze, zugesetzt.

Gut geeignete Katalysatoren für die Polymerisation sind alkalische Katalysatoren wie Magnesiumhalogenlactamate, Alkalicaprolactamate, Aluminium- oder Magnesiumlactam, Natrium-Caprolactamat oder Magnesium-Bromidlactamat, bevorzugt Alkalicaprolactamate, Aluminium- oder Magnesiumlactam, Natrium-Caprolactamat oder Magnesium-Bromidlactamat, besonders bevorzugt Natrium-Caprolactam oder Magnesium-Bromidlactamat. Besonders geeignet ist Natrium-Caprolactamat, das einfach aus Natrium und ε-Caprolactam hergestellt werden kann.

Das Mischungsverhältnis von Lactam, vorzugsweise Caprolactam, Aktivator und alkalischem Katalysator kann in weiten Grenzen variiert werden. In der Regel beträgt das Molverhältnis von Caprolactam zu Aktivator zu alkalischem Katalysator 1000 : 1 : 1 bis 1000 : 200 : 50.

Neben dem Katalysator und dem Aktivator kann das Lactam noch weitere Additive enthalten. Die weiteren Additive werden zur Einstellung der Eigenschaften des aus dem Lactam hergestellten Polyamids zugegeben. Übliche Additive sind zum Beispiel Weichmacher, Schlagzähmodifizierer, Vernetzer, Farbstoffe oder Flammschutzmittel.

Als textile Struktur im Rahmen der vorliegenden Erfindung werden Gewebe aus mindestens einer Lage, bevorzugt mehr als einer Lage, ein- oder mehrlagige Gestricke, ein- oder mehrlagige Gewirke, ein- oder mehrlagige Geflechte, Gelege, mindestens eine Lage, bevorzugt mehrere Lagen, aus parallel ausgerichteten Fasern, Garnen, Zwirnen oder Seilen, wobei die einzelnen Lagen der parallel ausgerichteten Fasern, Garne, Zwirne oder Seile zueinander gedreht sein können, oder Vliese verstanden. Bevorzugt liegen die textilen Strukturen als Gewebe oder in Form von Lagen parallel ausgerichteter Fasern, Garne, Zwirne oder Seile vor.

Wenn bei Gelegen die Lagen parallel ausgerichteter Fasern, Garne, Zwirne oder Seile gedreht zueinander eingesetzt werden, sind die einzelnen Lagen besonders bevorzugt jeweils um einen Winkel von 90° zueinander gedreht (bidirektionaler Aufbau). Bei Einsatz von drei Lagen oder eines Vielfachen von drei Lagen ist es auch möglich, die einzelnen Lagen um einen Winkel von 60° zueinander gedreht anzuordnen und bei vier Lagen oder Vielfachen von vier Lagen um einen Winkel von 45° zueinander gedreht. Weiterhin ist es auch möglich, mehr als eine Lage an Fasern mit gleicher Ausrichtung vorzusehen. Hierbei können ebenfalls Lagen zueinander verdreht sein, wobei die Anzahl an Lagen mit Fasern gleicher Ausrichtung in jeder der Ausrichtungen der Fasern unterschiedlich sein kann, beispielsweise vier Lagen in einer ersten Richtung und eine Lage in einer dazu zum Beispiel um 90° gedrehten Richtung (bidirektionaler Aufbau mit Vorzugsrichtung). Weiterhin ist auch ein quasiisotroper Aufbau bekannt, bei dem die Fasern einer zweiten Lage um 90° gedreht zu Fasern einer ersten Lage angeordnet sind und weiterhin Fasern einer dritten Lage um 45° gedreht zu den Fasern der zweiten Lage.

Besonders bevorzugt zur Herstellung der faserverstärkten, flachen Halbzeuge werden textilen Strukturen in 2 bis 10 Lagen, insbesondere in 2 bis 6 Lagen eingesetzt.

Die eingesetzten textilen Strukturen enthalten als Fasern vorzugsweise solche aus anorganischen Mineralien wie Kohlenstoff, beispielsweise als Niedermodulcarbonfasern oder Hochmodulcarbonfasern, silikatische und nicht silikatische Gläser der verschiedensten Art, Bor, Siliciumcarbid, Kaliumtitanat, Metalle, Metalllegierungen, Metalloxide, Metallnitride, Metallcarbide und Silikate, sowie organische Materialien wie natürliche und synthetische Polymere, beispielsweise Polyacrylnitrile, Polyester, ultrahochgereckte Polyolefinfasern, Polyamide, Polyimide, Aramide, Flüssigkristallpolymere, Polyphenylensulfide, Polyetherketone, Polyetheretherketone, Polyetherimide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Kaliumtitanat, Flüssigkristallpolymere, Polyphenylensulfide, Polyetherketone, Polyetheretherketone und Polyetherimide, besonders bevorzugt sind Glasfasern, Kohlenstofffasern, Aramidfasem, Stahlfasern, Kaliumtitanatfasern, Keramikfasern und/oder sonstige hinreichend temperaturbeständige polymere Fasern oder Fäden.

Um die textilen Strukturen gleichmäßig tränken zu können, werden diese vorzugsweise kontinuierlich auf einem Transportband abgelegt und durch eine Tränkeinrichtung geleitet. Eine geeignete Tränkeinrichtung ist zum Beispiel ein Bad, durch das die textilen Strukturen geleitet werden. Alternativ ist es auch möglich, die textilen Strukturen durch Besprühen, Beträufeln, Gießverfahren, bevorzugt unter Einsatz einer Breitschlitzdüse, mittels rotierender Zylinder oder durch Rakeln zu tränken oder zu beschichten. Besonders bevorzugt ist das Besprühen oder Begießen der textilen Strukturen oder eines Teils der textilen Strukturen mit stöchiometrischen Mengen an Lactam oder Lactamen, die schon die für die Polymerisation notwendigen Additive enthalten. So kann, im Gegensatz zu den beschriebenen Tränkverfahren, auf ein Auspressen von überschüssigem Lactam verzichtet werden. Zum Besprühen oder Begießen sind handelsübliche Zwei-Komponenten Niederdruckgießmaschinen geeignet, wie sie beispielsweise von der Firma Tartler, Michelstadt, vertrieben werden. Besonders bevorzugt zum Tränken beziehungsweise Beschichten der Fasern wird eine Breitschlitzdüse verwendet.

In einer bevorzugten Ausführungsform werden die textilen Strukturen vor dem Tränken auf eine Folie, bevorzugt eine Polyamidfolie aufgebracht. Die Folie hat einen positiven Einfluss auf die Oberfläche des hergestellten faserverstärkten, flachen Halbzeugs. So können durch den Einsatz der Folie qualitativ hochwertige Oberflächen erhalten werden, die zum Beispiel als sichtbare Oberfläche eingesetzt werden können. Weiterhin ist es auch möglich, die Folie als Transportband zu nutzen.

Um eine gleichmäßige Benetzung der Fasern der textilen Struktur zu erhalten und damit Fehlstellen zu vermeiden, ist es weiterhin bevorzugt, die textilen Strukturen vor dem Tränken auf eine Temperatur oberhalb der Schmelztemperatur des Lactams aufzuheizen. Dies hat den Vorteil, dass kein Lactam bei Kontakt mit den Fasern auskristallisiert und damit gegebenenfalls Strömungswege des Lactams beim Tränken blockiert, was zu Lunkern in dem faserverstärkten, flachen Halbzeug führen kann.

In einer bevorzugten Ausführungsform wird nach dem Tränken der textilen Strukturen mit Lactam eine Folie, bevorzugt eine Polyamidfolie auf die getränkten textilen Strukturen aufgebracht. Hierdurch wird ebenfalls eine qualitativ hochwertige Oberfläche erhalten, die als sichtbare Oberfläche genutzt werden kann. Besonders bevorzugt wird die Folie auf die getränkten textilen Strukturen aufgebracht, wenn die textilen Strukturen vor dem Tränken auf eine Folie aufgelegt worden sind. Hierdurch ist sowohl auf der Unterseite als auch auf der Oberseite des faserverstärkten, flachen Halbzeugs eine Polyamidfolie aufgebracht, so dass das faserverstärkte, flache Halbzeug sowohl auf der Oberseite als auch auf der Unterseite eine qualitativ hochwertige Oberfläche aufweist, die als sichtbare Oberfläche genutzt werden kann.

Um eine gleichmäßige Verteilung des geschmolzenen Lactams in den textilen Strukturen zu erhalten, werden die textilen Strukturen nach dem Tränken vorzugsweise gepresst. Bei dem Pressen kann zudem überschüssiges Lactam aus den textilen Strukturen herausgepresst werden, so dass eine gleichmäßige und vollständige Tränkung mit Lactam erzielt wird.

Um eine kontinuierliche Fertigung des faserverstärkten, flachen Halbzeugs zu ermöglichen, werden die getränkten textilen Strukturen zum Pressen vorzugsweise zwischen Walzen hindurchgeführt. Alternativ können die textilen Strukturen auch mit einer einzelnen Walze gegen das eingesetzte Transportband gepresst werden, wenn das Transportband nicht durch den Druck nachgibt.

Um die getränkten textilen Strukturen zu trocknen, werden diese abgekühlt. Wenn die getränkten textilen Strukturen gepresst werden, erfolgt die Abkühlung nach dem Pressen. Durch das Abkühlen erstarrt das eingesetzte Lactam, so dass das Lactam nach dem Trocknen in festem Zustand in den textilen Strukturen enthalten ist.

In einer bevorzugten Ausführungsform wird nach dem Tränken und vor dem Pressen der textilen Strukturen jeweils auf der Oberseite und auf der Unterseite der getränkten textilen Strukturen mindestens eine Faserlage, beispielsweise in Form eines Gestrickes, Gewebes, Geleges oder Vlieses aufgebracht. Durch das Pressen wird das in den textilen Strukturen enthaltene Lactam auch in die nach dem Tränken aufgebrachten Faserlagen eingebracht. Durch die nach dem Tränken aufgebrachten textilen Strukturen, die beim Pressen Lactam aufnehmen und mit dem Lactam getränkt werden, wird die Menge an überschüssigem Lactam reduziert.

Nach Pressen und dem Abkühlen, durch das das Lactam erstarrt, wird das Halbzeug konfektioniert. Hierzu wird das als Endlosband hergestellte faserverstärkte, flache Halbzeug zugeschnitten.

Zusätzlich oder alternativ zum Aufbringen der Folie, bevorzugt der Polyamidfolie auf der Oberseite und der Unterseite der getränkten textilen Strukturen ist es möglich, das konfektionierte faserverstärkte, flache Halbzeug in Folien einzuschweißen. Dies ermöglicht einerseits einen Schutz des hergestellten konfektionierten, faserverstärkten, flachen Halbzeugs, andererseits ist es auch möglich, eine weitere Verbesserung der Oberfläche zu erhalten.

Das Aufbringen der Folie auf der Oberseite und der Unterseite der getränkten textilen Strukturen hat den weiteren Vorteil, dass kein Wasser, das den Katalysator deaktiviert, in die getränkte textile Struktur eindiffundieren kann. Durch das Einschweißen in Folie wird dieser Effekt weiter verstärkt. Zudem werden durch das Einschweißen auch die Schmalseiten der getränkten textilen Strukturen verschlossen, so dass auch hier kein Wasser eindringen kann. Hierdurch wird die Lagerfähigkeit des Halbzeugs erhöht.

Als Folie, in die das Halbzeug eingeschweißt wird, kann jede beliebige Folie, die wasserundurchlässig ist, eingesetzt werden. Bevorzugt werden Polyamidfolien oder Polyesterfolien eingesetzt. Wenn Folien aus einem Material eingesetzt werden, dass verschieden ist von Polyamid oder Polyester, ist es im Allgemeinen notwendig, das Halbzeug vor der Weiterverarbeitung aus der Folie zu entnehmen. Bei Verwendung einer Polyamidfolie, gegebenenfalls auch bei Einsatz einer Polyesterfolie, kann das Halbzeug mitsamt der Folie weiterverarbeitet werden und muss nicht entnommen werden. Dies erlaubt eine einfachere Handhabung der Halbzeuge, die insbesondere im großtechnischen Einsatz gewünscht ist.

Aufgrund der Empfindlichkeit des Katalysators gegenüber Wasser ist es notwendig, das Halbzeug unter Ausschluss von Wasser, das heißt unter trockener Luft oder einem wasserfreien Inertgas, herzustellen und weiterzuverarbeiten. Sofern das Halbzeug nicht in einer Folie eingeschweißt ist oder zumindest an Oberseite und Unterseite von einer Folie bedeckt ist, ist eine Weiterverarbeitung innerhalb von 5 Minuten erforderlich, um eine unerwünschte Wasseraufnahme zu vermeiden, durch die der Katalysator deaktiviert wird und das Lactam nicht mehr vollständig auspolymerisiert.

Zusätzlich zum Verfahren zur Herstellung eines faserverstärkten, flachen Halbzeugs umfasst die Erfindung auch ein Verfahren zur Herstellung eines Bauteils aus dem flachen, faserverstärkten Halbzeug.

Das Verfahren zur Herstellung eines Bauteils aus einem faserverstärkten, flachen Halbzeug, umfasst folgende Schritte:
(i) Herstellung des faserverstärkten, flachen Halbzeugs wie vorstehend beschrieben,
(ii) Einlegen des faserverstärkten, flachen Halbzeugs in eine Form,
(iii) Umformen des faserverstärkten, flachen Halbzeugs zum Bauteil bei gleichzeitigem Heizen der Form, so dass das Lactam zu Polyamid polymerisiert.

Durch die Herstellung des konfektionierten, faserverstärkten, flachen Halbzeugs ist es möglich, die Herstellung des Bauteils von der Herstellung des Halbzeugs zu trennen. So kann in einem kontinuierlichen Verfahren das Halbzeug hergestellt werden und nach der Herstellung zur Herstellung des Bauteils bereitgehalten werden. Dies ermöglicht einen Großserieneinsatz, bei dem die Halbzeugherstellung unabhängig von der Bauteilherstellung erfolgt. So können zum Beispiel mit einer Vorrichtung Halbzeuge hergestellt werden und die hergestellten Halbzeuge in mehreren Vorrichtungen zu Bauteilen geformt werden. Es ist nicht für jede Vorrichtung zur Herstellung von Bauteilen eine zugeordnete Einheit zur Herstellung der Halbzeuge notwendig, so dass sowohl Investitionskosten als auch Betriebskosten eingespart werden können.

Zur Herstellung wird das nach dem vorstehend beschriebenen Verfahren hergestellte faserverstärkte, flache Halbzeug in eine Form eingelegt, in der das faserverstärkte, flache Halbzeug zum Bauteil geformt wird. Geeignete Verfahren zum Umformen sind zum Beispiel Tiefziehverfahren oder Pressverfahren.

Erfindungsgemäß ist die Form, in der das Halbzeug zu dem Bauteil geformt wird, auf eine Temperatur geheizt, bei der das Lactam zum Polyamid anionisch polymerisiert. Die Temperatur der Form liegt dabei vorzugsweise im Bereich von 100 bis 200°C, mehr bevorzugt im Bereich von 120 bis 180°C und insbesondere im Bereich von 140 bis 170°C. Der in dem Lactam enthaltene Katalysator katalysiert die anionische Polymerisation und bleibt nach der Polymerisation im hergestellten Polyamid enthalten.

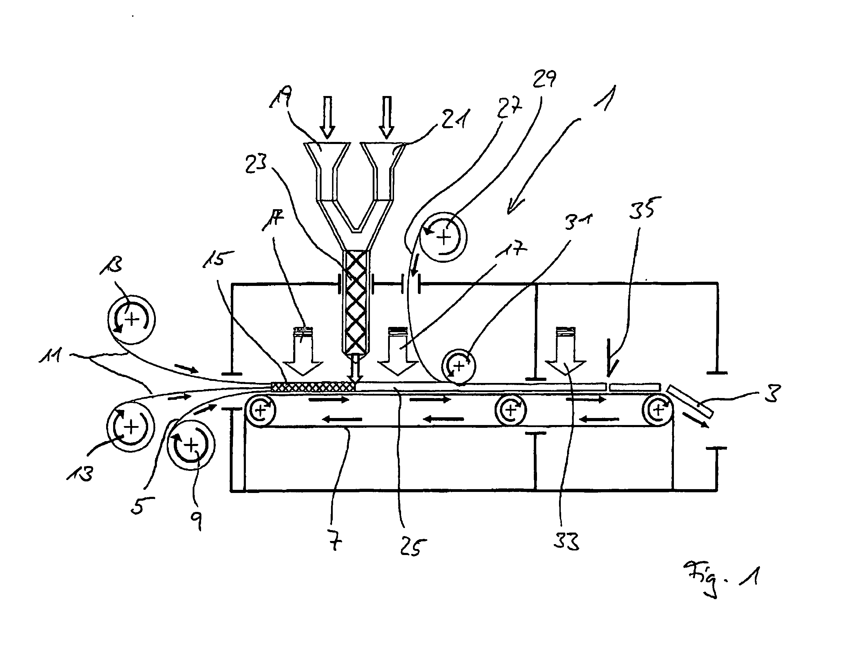

Ein Ausführungsbeispiel der Erfindung ist in der Figur dargestellt und wird in der nachfolgenden Beschreibung näher erläutert.

Die einzige Figur zeigt eine schematische Darstellung des erfindungsgemäßen Verfahrens zur Herstellung eines faserverstärkten, flachen Halbzeugs.

Einer Vorrichtung 1 zur Herstellung faserverstärkter, flacher Halbzeuge 3 wird eine erste Folie 5 zugeführt. Die erste Folie 5 wird auf ein Transportband 7 aufgelegt. Als Transportband 7 eignet sich jedes beliebige, dem Fachmann bekannte Transportband, mit dem die Folie 5 eben transportiert werden kann. Die Oberfläche des Transportbandes 7 ist dabei so gestaltet, dass die Folie 5 durch die Bewegung des Transportbandes 7 und beim Auflegen auf das Transportband 7 nicht beschädigt wird. Um das Verfahren kontinuierlich betreiben zu können, ist die Folie 5 auf einer Rolle 9 bevorratet, von der diese abgewickelt und der Vorrichtung 1 zugeführt wird.

In der hier dargestellten Ausführungsform werden auf der Folie 5 zwei Lagen Fasern 11 abgelegt. Die Fasern 11 können dabei als Gewebe, Gewirk, Gestrick, Gelege, Vlies oder als parallel ausgerichtete Fasern, Garne, Zwirne oder Seile vorliegen. Wenn parallel ausgerichtete Fasern eingesetzt werden, so ist es bevorzugt, die Fasern der einzelnen Lagen zueinander gedreht, bevorzugt um 90° zueinander gedreht auszurichten. Die Zugabe der Fasern 11 erfolgt ebenfalls kontinuierlich, wobei die Fasern 11 auf einer Rolle 13 bevorratet sind. Die auf der Folie 5 abgelegten Fasern 11 bilden die zu tränkende textile Struktur 15.

Um eine gleichmäßige Benetzung der Fasern der textilen Struktur 15 mit Lactam zu erhalten, wird die textile Struktur vorzugsweise erwärmt. Die Wärmezufuhr ist in der Figur mit Pfeilen 17 dargestellt. Nach dem Erwärmen wird die textile Struktur 15 mit geschmolzenem Lactam getränkt. Das geschmolzene Lactam enthält mindestens einen Katalysator, der die anionische Polymerisation zu Polyamid katalysiert sowie gegebenenfalls mindestens einen Aktivator. Zusätzlich können auch noch weitere Additive, mit denen die Eigenschaften eines aus dem Lactam hergestellten Polyamids beeinflusst werden können, enthalten sein. Die Temperatur, auf die die textile Struktur 15 erwärmt wird, entspricht vorzugsweise der Schmelztemperatur des eingesetzten Lactams. Bevorzugt liegt die Temperatur im Bereich von 70 bis 90°C. Bei der Erwärmung ist darauf zu achten, dass die Temperatur des geschmolzenen Lactams und die Temperatur, auf die die textile Struktur 15 erwärmt wird, unterhalb der Starttemperatur für die anionische Polymerisation des Lactams gehalten wird.

In der hier dargestellten Ausführungsform wird über einen ersten Zulauf 19 aufgeschmolzenes Lactam mit Aktivator und über einen zweiten Zulauf 21 aufgeschmolzenes Lactam mit Katalysator einer Mischeinheit 23 zugegeben. Die Mischeinheit kann zum Beispiel als Extruder oder auch als statischer Mischer gestaltet sein. In der Mischeinheit wird eine homogene Mischung des Lactams mit Aktivator und Katalysator erzeugt. Das geschmolzene, Aktivator und Katalysator enthaltende Lactam wird auf die textile Struktur 15 aufgetragen. Hierbei kann jede beliebige, dem Fachmann bekannte Vorrichtung zum Tränken der textilen Strukturen 15 eingesetzt werden. So ist es zum Beispiel möglich, die textilen Strukturen durch Vorhanggießen oder andere Gießverfahren mit dem geschmolzenen Lactam zu tränken. Alternativ ist es auch möglich, das Lactam auf die textilen Strukturen 15 aufzusprühen. Weiterhin können die textilen Strukturen auch durch ein Bad mit geschmolzenem Lactam geführt werden oder mittels benetzter Walzen getränkt werden. Bevorzugt ist es dabei, die textilen Strukturen durch Aufsprühen zu tränken.

Nach dem Tränken wird auf die getränkte textile Struktur 25 in der hier dargestellten Ausführungsform eine zweite Folie 27 aufgebracht Die zweite Folie 27 wird dabei vorzugsweise ebenso wie die erste Folie 5 von einer Rolle 29, auf der sie bevorratet ist, abgerollt.

In einem nächsten Schritt wird die getränkte textile Struktur 25 gepresst. Hierzu wird die getränkte textile Struktur 25 zum Beispiel mit einer Walze 31 gegen das Transportband 7 gedrückt. Alternativ ist es auch möglich, die getränkte textile Struktur 25 zum Beispiel zwischen zwei gegensinnig rotierenden Walzen hindurchzuführen, wobei der Abstand zwischen den gegensinnig rotierenden Walzen kleiner ist als die Dicke der getränkten textilen Struktur 25 vor dem Durchlaufen durch die Walzen. Durch den Abstand der Walzen oder den Abstand der Walze 31 zum Transportband 7 wird die Kraft eingestellt, mit der die getränkte textile Struktur 25 gepresst wird.

In einer hier nicht dargestellten Ausführungsform wird nach dem Tränken auf der Oberseite und/oder der Unterseite der getränkten textilen Struktur mindestens eine weitere Faserlage aufgebracht. Die zusätzlich aufgebrachten Fasern sind dabei vorzugsweise von der gleichen Art wie die Fasern 11, die die textile Struktur 15 bilden. Alternativ ist es jedoch auch möglich, dass die Fasern, die die textile Struktur 15 bilden, zum Beispiel einzelne Lagen parallel ausgerichteter Fasern, Garne, Zwirne oder Seile sind, oder dass ein Vlies die textile Struktur 15 bildet und die zusätzlichen Lagen Gewebe, Gewirke oder Gestricke sind.

Durch das Pressen der getränkten textilen Struktur 25 wird Lactam in die zusätzlich aufgebrachten Faserlagen gepresst, wodurch die zusätzlich aufgebrachten Faserlagen ebenfalls mit Lactam getränkt werden.

Nach dem Pressen wird die getränkte textile Struktur 25 abgekühlt. Dies ist mit einem Pfeil 33 dargestellt. Durch das Abkühlen erstarrt das Lactam und es entsteht eine textile Struktur, die festes Lactam enthält. Diese wird mit einem Schneidwerkzeug 35, beispielsweise einem Messer, einer Stanze oder einer Säge, zum faserverstärkten, flachen Halbzeug 3 konfektioniert.

Zur Herstellung von Bauteilen wird das faserverstärkte, flache Halbzeug in eine Form eingelegt, die auf eine Temperatur geheizt ist, bei der das Lactam anionisch zu dem Polyamid auspolymerisiert. Durch das Erwärmen auf eine Temperatur oberhalb der Starttemperatur der anionischen Polymerisation polymerisiert das Lactam, mit dem die textilen Strukturen getränkt sind, zu dem korrespondierenden Polyamid. Durch das gleichzeitige Pressen wird das faserverstärkte, flache Halbzeug in die gewünschte Form des herzustellenden Bauteils gebracht.

Bauteile, die auf diese Weise hergestellt werden können, sind zum Beispiel Teile von Fahrzeugkarosserien, Strukturbauteile für Fahrzeuge, wie Böden oder Dächer, Komponentenbauteile für Fahrzeuge, wie Montageträger, Sitzstrukturen, Tür- oder Innenverkleidungen, aber auch Bauteile für Windkraftanlagen oder Schienenfahrzeuge.

### Bezugszeichenliste

- 1: Vorrichtung zur Herstellung faserverstärkter, flacher Halbzeuge
- 3: faserverstärktes, flaches Halbzeug
- 5: Polyamidfolie
- 7: Transportband
- 9: Rolle mit Polyamidfolie
- 11: Faser
- 13: Rolle mit Faservorrat
- 15: textile Struktur
- 17: Wärmezufuhr
- 19: erster Zulauf
- 21: zweiter Zulauf
- 23: Mischeinheit
- 25: getränkte textile Struktur
- 27: zweite Polyamidfolie
- 29: Rolle mit zweiter Polyamidfolie
- 31: Walze
- 33: Abkühlung
- 35: Schneidwerkzeug

## Patentansprüche

1. Verfahren zur Herstellung von faserverstärkten, flachen Halbzeugen (3) auf Polyamidmatrix, folgende Schritte umfassend:
(a) Tränken von textilen Strukturen (15) mit einer Mischung enthaltend geschmolzenes Lactam, Katalysator und gegebenenfalls Aktivator, wobei die Temperatur des geschmolzenen Lactams unterhalb der Starttemperatur gehalten wird, bei der das Lactam beginnt, zum Polyamid zu polymerisieren,
(b) Trocknen der getränkten textilen Strukturen (25) durch Abkühlung,
(c) Konfektionieren der abgekühlten textilen Strukturen zu dem faserverstärkten, flachen Halbzeug (3).

2. Verfahren gemäß Anspruch 1, **dadurch gekennzeichnet, dass** die textilen Strukturen (15) vor dem Tränken auf eine Folie (5) aufgebracht werden.

3. Verfahren gemäß Anspruch 1 oder 2, **dadurch gekennzeichnet, dass** die textilen Strukturen (15) vor dem Tränken auf eine Temperatur oberhalb der Schmelztemperatur des Lactams aufgeheizt werden.

4. Verfahren gemäß einem der Ansprüche 1 bis 3, **dadurch gekennzeichnet, dass** nach dem Tränken in Schritt (a) eine Folie (27) auf die getränkten textilen Strukturen (25) aufgebracht wird.

5. Verfahren gemäß einem der Ansprüche 2 bis 4, **dadurch gekennzeichnet, dass** die Folie (5), auf die die textilen Strukturen aufgebracht werden und/oder die Folie (27), die auf die getränkten textilen Strukturen aufgebracht wird, eine Polyamidfolie ist.

6. Verfahren gemäß einem der Ansprüche 1 bis 5, **dadurch gekennzeichnet, dass** die getränkten textilen Strukturen (25) gepresst werden.

7. Verfahren gemäß einem der Ansprüche 1 bis 6, **dadurch gekennzeichnet, dass** die getränkten textilen Strukturen (25) zum Pressen zwischen Walzen (31) hindurchgeführt werden.

8. Verfahren gemäß Anspruch 6 oder 7, **dadurch gekennzeichnet, dass** die getränkten textilen Strukturen (25) nach dem Pressen abgekühlt werden.

9. Verfahren gemäß einem der Ansprüche 6 bis 8, **dadurch gekennzeichnet, dass** nach dem Tränken und vor dem Pressen jeweils mindestens eine Faserlage auf der Oberseite und der Unterseite der getränkten textilen Strukturen (25) aufgebracht wird.

10. Verfahren gemäß einem der Ansprüche 1 bis 9, **dadurch gekennzeichnet, dass** die textilen Strukturen (15) Gewebe, Gewirke, Gestricke, Gelege oder Vliese aus Endlosfasern sind.

11. Verfahren gemäß einem der Ansprüche 1 bis 9, **dadurch gekennzeichnet, dass** die textilen Strukturen (15) aus einzelnen Lagen aus Endlosfasern gefertigt sind, wobei die einzelnen Lagen parallel angeordnete Fasern umfassen und die Fasern übereinander liegender Lagen zueinander gedreht angeordnet sind.

12. Verfahren gemäß einem der Ansprüche 1 bis 11, **dadurch gekennzeichnet, dass** als Material für die Fasern anorganische Mineralien wie Kohlenstoff, silikatische und nicht silikatische Gläser der verschiedensten Art, Bor, Siliciumcarbid, Kaliumtitanat, Metalle, Metalllegierungen, Metalloxide, Metallnitride, Metallcarbide und Silikate, oder organische Materialien wie natürliche und synthetische Polymere verwendet werden.

13. Verfahren gemäß einem der Ansprüche 1 bis 12, **dadurch gekennzeichnet, dass** die textilen Strukturen (15) drei bis zehn Lagen Fasern umfassen.

14. Verfahren gemäß einem der Ansprüche 1 bis 13, **dadurch gekennzeichnet, dass** das faserverstärkte, flache Halbzeug (3) nach der Konfektionierung in Folien eingeschweißt wird.

15. Verfahren gemäß Anspruch 14, **dadurch gekennzeichnet, dass** die Folien, in die das faserverstärkte, flache Halbzeug (3) eingeschweißt wird, Polyamidfolien oder Polyesterfolien sind.

16. Verfahren gemäß einem der Ansprüche 1 bis 15, **dadurch gekennzeichnet, dass** die Fasern der textilen Struktur zunächst mit einem Aktivator beschichtet werden.

17. Verfahren zur Herstellung eines Bauteils aus einem endlosfaserverstärkten, flachen Halbzeug, umfassend folgende Schritte:
(i) Herstellung des Halbzeugs nach einem der Ansprüche 1 bis 16,
(ii) Einlegen des Halbzeugs in ein Werkzeug,
(iii) Pressen des Halbzeugs zum Bauteil und Heizen des Werkzeugs, so dass das Lactam zu Polyamid polymerisiert und dabei das Bauteil geformt wird.

18. Verfahren nach Anspruch 17, **dadurch gekennzeichnet, dass** das Werkzeug auf eine Temperatur im Bereich von 100 bis 190°C geheizt wird.

## Claims

1. A process for producing fiber-reinforced flat semifinished products (3) based on a polyamide matrix, comprising the following steps:
(a) saturation of textile structures (15) with a mixture comprising molten lactam, catalyst, and optionally activator, where the temperature of the molten lactam is kept below the initiation temperature at which the lactam begins to polymerize to give the polyamide,
(b) drying of the saturated textile structures (25) by cooling, and
(c) finishing of the cooled textile structures to give the fiber-reinforced flat semifinished product (3).

2. The process according to claim 1, wherein the textile structures (15) are applied to a foil (5) prior to the saturation process.

3. The process according to claim 1 or 2, wherein the textile structures (15) are heated to a temperature above the melting point of the lactam, prior to the saturation process.

4. The process according to any of claims 1 to 3, wherein a foil (27) is applied to the saturated textile structures (25), after the saturation process in step (a).

5. The process according to any of claims 2 to 4, wherein the foil (5) to which the textile structures are applied and/or the foil (27) which is applied to the saturated textile structures is a polyamide foil.

6. The process according to any of claims 1 to 5, wherein the saturated textile structures (25) are pressed.

7. The process according to any of claims 1 to 6, wherein the saturated textile structures (25) are passed through between rolls (31) for the pressing process.

8. The process according to claim 6 or 7, wherein the saturated textile structures (25) are cooled after the pressing process.

9. The process according to any of claims 6 to 8, wherein, after the saturation process and prior to the pressing process, in each case at least one fiber ply is applied to the upper side and the lower side of the saturated textile structures (25).

10. The process according to any of claims 1 to 9, wherein the textile structures (15) are wovens, knits, laid scrims, or nonwovens made of continuous fibers.

11. The process according to any of claims 1 to 9, wherein the textile structures (15) have been manufactured from individual plies made of continuous fibers, where the individual plies comprise parallel-arranged fibers, and the fibers of mutually superposed plies have been arranged so as to be mutually nonparallel.

12. The process according to any of claims 1 to 11, wherein material used for the fibers comprises inorganic minerals, such as carbon, silicatic and nonsilicatic glasses of a very wide variety of types, boron, silicon carbide, potassium titanate, metals, metal alloys, metal oxides, metal nitrides, metal carbides, and silicates, or organic materials, such as natural and synthetic polymers.

13. The process according to any of claims 1 to 12, wherein the textile structures (15) comprise from three to ten plies of fibers.

14. The process according to any of claims 1 to 13, wherein the fiber-reinforced flat semifinished product (3) is welded into foils after the finishing process.

15. The process according to claim 14, wherein the foils into which the fiber-reinforced flat semifinished product (3) is welded are polyamide foils or polyester foils.

16. The process according to any of claims 1 to 15, wherein the fibers of the textile structure are first coated with an activator.

17. A process for producing a component made of a flat semifinished product reinforced by continuous fiber, comprising the following steps:
(i) production of the semifinished product according to any of claims 1 to 16,
(ii) insertion of the semifinished product into a mold, and
(iii) pressing of the semifinished product to give the component and heating of the mold, so that the lactam polymerizes to give polyamide and the component is thus molded.

18. The process according to claim 17, wherein the mold is heated to a temperature in the range from 100 to 190°C.

## Revendications

1. Procédé pour la production de produits semi-finis (3) plats, renforcés par des fibres sur une matrice de polyamide, comprenant les étapes suivantes
(a) imprégnation de structures textiles (15) par un mélange contenant un lactame fondu, un catalyseur et le cas échéant un activateur, la température du lactame fondu étant maintenue sous la température de démarrage à laquelle le lactame commence à polymériser en polyamide,
(b) séchage des structures textiles imprégnées (25) par refroidissement,
(c) confection des structures textiles refroidies en produits semi-finis (3) plats, renforcés par des fibres.

2. Procédé selon la revendication 1, **caractérisé en ce que** les structures textiles (15) sont appliquées, avant l'imprégnation, sur une feuille (5).

3. Procédé selon la revendication 1 ou 2, **caractérisé en ce que** les structures textiles (15) sont chauffées, avant l'imprégnation, à une température supérieure à la température de fusion du lactame.

4. Procédé selon l'une quelconque des revendications 1 à 3, **caractérisé en ce qu'**après l'imprégnation dans l'étape (a), une feuille (27) est appliquée sur les structures textiles imprégnées (25).

5. Procédé selon l'une quelconque des revendications 2 à 4, **caractérisé en ce que** la feuille (5), sur laquelle les structures textiles sont appliquées, et/ou la feuille (27), qui est appliquée sur les structures textiles imprégnées, est une feuille de polyamide.

6. Procédé selon l'une quelconque des revendications 1 à 5, **caractérisé en ce que** les structures textiles imprégnées (25) sont pressées.

7. Procédé selon l'une quelconque des revendications 1 à 6, **caractérisé en ce que** les structures textiles imprégnées (25) sont passées entre des cylindres (31) pour le pressage.

8. Procédé selon la revendication 6 ou 7, **caractérisé en ce que** les structures textiles imprégnées (25) sont refroidies après le pressage.

9. Procédé selon l'une quelconque des revendications 6 à 8, **caractérisé en ce qu'**après l'imprégnation et avant le pressage, au moins une couche fibreuse est à chaque fois appliquée sur la face supérieure et la face inférieure des structures textiles imprégnées (25).

10. Procédé selon l'une quelconque des revendications 1 à 9, **caractérisé en ce que** les structures textiles (15) sont des tissus, des étoffes, des tricots, des nattes ou des non-tissés en filaments.

11. Procédé selon l'une quelconque des revendications 1 à 9, **caractérisé en ce que** les structures textiles (15) sont réalisées à partir de couches individuelles de filaments, les couches individuelles comprenant des fibres disposées parallèlement et les fibres de couches superposées étant disposées de manière tournée les unes par rapport aux autres.

12. Procédé selon l'une quelconque des revendications 1 à 11, **caractérisé en ce qu'**on utilise, comme matériaux pour les fibres, des minéraux inorganiques tels que le carbone, les verres silicatés et non silicatés de différents types, le bore, le carbure de silicium, le titanate de potassium, les métaux, les alliages métalliques, les oxydes métalliques, les nitrures métalliques, les carbures métalliques et les silicates, ou des matériaux organiques tels que des polymères naturels et synthétiques.

13. Procédé selon l'une quelconque des revendications 1 à 12, **caractérisé en ce que** les structures textiles (15) comprennent trois à dix couches de fibres.

14. Procédé selon l'une quelconque des revendications 1 à 13, **caractérisé en ce que** le produit semi-fini (3) plat, renforcé par des fibres est soudé dans des feuilles après la confection.

15. Procédé selon la revendication 14, **caractérisé en ce que** les feuilles, dans lesquelles le produit semi-fini (3) plat, renforcé par des fibres est soudé, sont des feuilles de polyamide ou des feuilles de polyester.

16. Procédé selon l'une quelconque des revendications 1 à 15, **caractérisé en ce que** les fibres de la structure textile sont d'abord revêtues par un activateur.

17. Procédé pour la production d'une pièce en un produit semi-fini plat, renforcé par des fibres de filament, comprenant les étapes suivantes
(i) production du produit semi-fini selon l'une quelconque des revendications 1 à 16,
(ii) introduction du produit semi-fini dans un outil,
(iii) pressage du produit semi-fini en pièce et chauffage de l'outil de manière telle que le lactame polymérise en polyamide et que la pièce est ainsi formée.

18. Procédé selon la revendication 17, **caractérisé en ce que** l'outil est chauffé à une température dans la plage de 100 à 190°C.
